# FASCICULE DE BREVET EUROPEEN

(11) **EP 2 620 013 B1**
(45) Date de publication et mention de la délivrance du brevet: **13.01.2016**
(21) Numéro de dépôt: 10773651.4
(22) Date de dépôt: 24.09.2010
(51) Int. Cl.: H04W 76/02, H04W 12/08, H04W 84/08

(54) **INFRASTRUCTURE DE RÉSEAU PROFESSIONNEL DE RADIOCOMMUNICATION**
INFRASTRUKTUR EINES PROFESSIONELLEN FUNKKOMMUNIKATIONSNETZWERKES
PROFESSIONAL RADIOCOMMUNICATION NETWORK INFRASTRUCTURE

(43) Date de publication de la demande: 31.07.2013
(73) Titulaire: Airbus DS SAS, 78990 Elancourt (FR)
(72) Inventeur: PISON, Laurent, F-78760 Jouars Ponchartrain (FR)
(74) Mandataire: Lebkiri, Alexandre
(86) Numéro de dépôt international: PCT/FR2010/052016
(87) Numéro de publication internationale: WO 2012/038611

(56) Documents cités:
- WO-A1-2009/089908
- DURANTINI A ET AL: "Integration of Broadband Wireless Technologies and PMR Systems for Professional Communications", NETWORKING AND SERVICES, 2008. ICNS 2008. FOURTH INTERNATIONAL CONFERENCE ON, IEEE, PISCATAWAY, NJ, USA, 16 mars 2008 (2008-03-16), pages 84-89, XP031239280, ISBN: 978-0-7695-3094-9
- AIACHE H ET AL: "Increasing Public Safety Communications Interoperability: The CHORIST Broadband and Wideband Rapidly Deployable Systems", COMMUNICATIONS WORKSHOPS, 2009. ICC WORKSHOPS 2009. IEEE INTERNATIONAL CONFERENCE ON, IEEE, PISCATAWAY, NJ, USA, 14 juin 2009 (2009-06-14), pages 1-6, XP031515444, ISBN: 978-1-4244-3437-4

## Description

La présente invention concerne une infrastructure de réseau professionnel de radiocommunication PMR.

Les réseaux professionnels de communication PMR (« Professional Mobile Radiocommunications » en anglais) de type TETRA (« Trans European Trunked Radio ») ou TETRAPOL défini par le forum d'industriels TETRAPOL (http://www.tetrapol.com) ou encore de type P25 défini par la « Telecommunications Industry Association (TIA) » pour l' « Association of Public-Safety Communications Officers (APCO)» sont des réseaux indépendants de communication mobile dédiés à l'usage des entreprises ou des administrations, notamment pour assurer la sécurité publique, la sécurité industrielle ou dans les activités de transport. Les réseaux PMR sont largement utilisés par les services de sécurité publique (gendarmerie et police nationale par exemple) et des secours, et également par bien d'autres catégories d'utilisateurs (transports publics, aéroports,...). Ce sont des réseaux privés qui présentent un haut niveau de sécurité. Les réseaux PMR actuels, basés sur les technologies citées ci-dessus, sont des réseaux dits à bande étroite, caractérisés par une largeur de canal de l'ordre d'une dizaine de kilohertz (kHz).

La structure des réseaux professionnels de communication est normalisée. Ces derniers reposent sur une architecture maillée commune à tout type de réseaux de communication. Les terminaux mobiles se connectent au réseau via des points d'accès sans-fil, appelés stations de base.

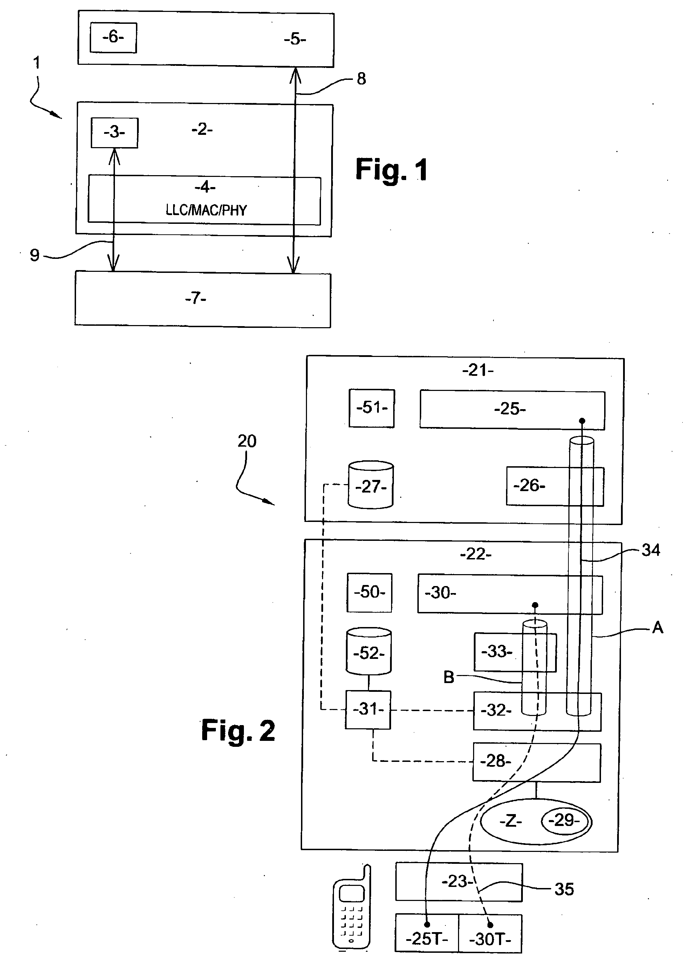

Comme représenté sur la figure 1, l'architecture d'un réseau PMR 1 de type bande étroite (narrowband en anglais) comporte habituellement :
- un contrôleur de site 2 (« site controller » en anglais) qui comporte :
   o un relais radio 4 intégrant un transmetteur fonctionnant en émission/réception radio et deux ou trois couches :
      ▪ une couche physique PHY ;
      ▪ une couche de type MAC (« Media Access Control » en anglais) ;
      ▪ éventuellement une couche de type LLC (« Logical Link Control » en anglais) ;
   o des applications embarquées 3 pour un fonctionnement minimal auxquelles les terminaux peuvent avoir accès via le relais radio 4;
- des moyens 5 permettant l'accès des terminaux 7 (seul un terminal 7 a été représenté ici) à une série d'applications centralisées 6 (ou services centralisés 6) de communication de plus haut niveau que les applications embarquées 3. Les applications 6 permettent notamment en état de fonctionnement nominal d'assurer le routage et la commutation des données de communications entre les différents terminaux 7.

Le contrôleur de site 2 vise à gérer un site ou zone géographique prédéfinie (dite « resilient area » en anglais) que l'on veut protéger de manière résiliente (la résilience est la capacité du site à continuer de fonctionner en cas de panne par exemple du contrôleur central, du réseau de transport ou de la plupart des entités (redondées) du site). Cette zone est composée d'au moins un relais radio et d'au moins une cellule.

Le relais radio 4 et les moyens d'accès 5 permettent aux terminaux d'avoir accès aux applications centralisées 6 de communication via un canal 8 alloué de façon dynamique ou « trunked » en anglais.

En fonctionnement nominal, le terminal mobile 7 a donc accès aux applications centralisées 6 qui lui permettent de communiquer avec les terminaux rattachés à une communication de groupe.

Toutefois, si le canal de communication 8 établi entre le terminal mobile 7 et les moyens 5 est interrompu (typiquement une perte des liens dans des lieux difficiles d'accès ou une perte du réseau), les systèmes PMR ont une exigence de mission critique. Dans ce cas, le réseau PMR doit permettre de passer d'un état de fonctionnement nominal (canal 8) à un état de fonctionnement isolé (canal 9). Le contrôleur 2 va détecter l'état de fonctionnement isolé et doit assurer un fonctionnement minimal des communications de groupe du site géré par le contrôleur 2. Ainsi, dans le cas d'un état de fonctionnement isolé, les terminaux appartenant à un même site ont accès via le relais 4 à une série d'applications 3 a minima ; cette série d'applications 3 de fonctionnement minimal comporte évidemment moins d'applications que la série d'applications centralisées 6 mais doit permettre d'assurer a minima les communications vocales de groupes des terminaux du site.

L'évolution des réseaux de télécommunication et la montée du haut débit incitent les utilisateurs de réseaux PMR à demander des applications toujours plus évoluées, nécessitant une bande passante plus importante. Dès lors, il est important de pouvoir faire évoluer les réseaux PMR vers de plus hauts débits en large bande correspondant à un standard de radiocommunication mobile de longue portée de type LTE (« Long Term Evolution » en anglais) ou WiMAX (« Worldwide Interoperability for Microwave Access » en anglais). Ces technologies permettant des communications à très haut débit tels que les technologies LTE ou WIMAX, à la différence des technologies 2G ou 3G où l'on distinguait les domaines de commutation de circuit (« circuit switched » en anglais) et de commutation de paquets (« paquet switched » en anglais), ne possèdent maintenant qu'un seul domaine paquet ; ainsi, tous les services seront offerts sur IP (« Internet Protocol » en anglais), y-compris ceux qui étaient auparavant offerts par le domaine circuit tels que la voix, la visiophonie,... Il convient toutefois de noter que les exigences propres aux réseaux publics utilisant les technologies très haut débit sans fils tels que LTE ou WIMAX sont très différentes de celles des réseaux PMR. Ainsi, les notions de missions critiques et de résilience (disponibilité du réseau même en cas de perte d'accès au contrôleur de site) propres aux réseaux PMR ne sont pas prises en considération dans les technologies haut débit de type LTE ou WIMAX qui visent davantage à toucher un maximum d'utilisateurs avec une grande densité de sites radio.

Certaines technologies comme TETRA ont évolué vers de plus hauts débits TEDS (pour TETRA Enhanced Data Système) en bande large avec des débits de l'ordre de quelques centaines de kbits/s. Cette augmentation importante de débit, comparée aux systèmes bande étroite, n'offre toutefois que certaines nouvelles applications de type e-mail, accès Internet/Intranet, vidéo faible résolution. Il s'ensuit que l'avancée apportée par les technologies large bande est insuffisante et inadapté à l'évolution des applications actuelles et aux besoins grandissant des différents utilisateurs (typiquement, la vidéo mobile).

Dans ce contexte, l'invention vise à proposer une infrastructure de réseau professionnel de radiocommunication fonctionnant en mode paquets et permettant un transfert de données à très haut débit tout en prenant en compte les spécificités des réseaux PMR. DURANTINI A ET AL: "Integration of Broadband Wireless Technologies and PMR Systems for Professional Communications" (XP031239280) décrit l'intégration des technologies sans fil à large bande et PMR.

A cette fin, l'invention porte sur une infrastructure de réseau professionnel de radiocommunication fonctionnant en mode paquets, ladite infrastructure comportant un contrôleur de site d'une zone géographique déterminée comportant au moins une station de base apte à assurer la transmission et la réception radio avec au moins un terminal utilisateur se trouvant dans au moins une cellule rattachée à ladite station de base, ladite infrastructure étant caractérisée en ce qu'elle comporte en outre des moyens de gestion centralisée comportant :
- au moins une application centralisée apte à communiquer avec une première application comprise dans ledit terminal;
- des moyens de supervision centralisée aptes à détecter si ladite infrastructure est dans un état de fonctionnement nominal ou isolé; et
- des moyens de rattachement centralisé à un réseau centralisé de paquets pour établir un accès entre ladite au moins une application centralisée et ladite première application lors d'un fonctionnement de ladite infrastructure détecté selon un état nominal ;
ledit contrôleur de site comportant :
- au moins une application locale de communication apte à communiquer avec une deuxième application comprise dans ledit terminal utilisateur;
- des moyens de supervision locale aptes à détecter si ladite infrastructure est dans un état de fonctionnement nominal ou isolé;
- des moyens d'authentification et de contrôle de terminaux utilisateurs aptes à authentifier les terminaux utilisateurs appartenant au dit réseau professionnel ;
- une passerelle de distribution assurant la réception et l'émission radio avec ladite au moins une station de base ; et
- des moyens de rattachement local à un réseau local de paquets pour établir un accès entre ladite application locale de communication et ladite deuxième application lors d'un fonctionnement de ladite infrastructure détecté selon un état isolé;
lorsque ladite infrastructure se trouve dans un état de fonctionnement nominal, est alloué à chaque terminal utilisateur situé dans la zone géographique déterminée et rattaché au dit contrôleur de site :
- un canal d'accès centralisé reliant ladite passerelle de distribution à ladite application centralisée via lesdits premiers moyens de rattachement, ledit terminal utilisateur étant apte à être rattaché aux dits premiers moyens de rattachement via ladite passerelle de distribution au moyen d'un canal centralisé de données qui lui est alloué dynamiquement, ledit canal centralisé de données passant par ledit canal d'accès centralisé;
- un canal d'accès local reliant ladite passerelle de distribution à ladite application locale de communication via lesdits deuxièmes moyens de rattachement, ledit terminal utilisateur étant apte à être rattaché aux dits deuxièmes moyens de rattachement via ladite passerelle de distribution au moyen d'un canal local de données qui lui est alloué dynamiquement, ledit canal local de données passant par ledit canal d'accès local;
lorsque ladite infrastructure est dans un état de fonctionnement local au cours duquel l'accès aux dits moyens de gestion centralisée est interrompu, est alloué à chaque terminal utilisateur situé dans la zone géographique déterminée et rattaché au dit contrôleur de site uniquement ledit canal d'accès local, ledit terminal utilisateur étant apte à être rattaché aux dits deuxièmes moyens de rattachement via ladite passerelle de distribution au moyen dudit canal local de données qui lui est alloué dynamiquement et passant par ledit canal d'accès local.

Grâce à l'invention, l'infrastructure selon l'invention permet pour un utilisateur d'un réseau PMR d'avoir la vision et l'impression d'un réseau global standard. Selon l'état de fonctionnement nominal, tous les services standards (applications centralisées et éventuellement applications locales) sont disponibles. Selon l'état de fonctionnement isolé, tous les services locaux (applications locales) sont accessibles : l'utilisateur a ainsi l'impression d'avoir un accès à un réseau utilisant les technologies très haut débit sans fils tels que les technologies LTE ou WIMAX complet standard de la taille d'un site.

Pour ce faire, on descend un point d'ancrage réseau au niveau site et on rend compatible les exigences (en particulier les exigences de résilience dans le cadre d'une mission critique) d'une infrastructure de réseau professionnel de radiocommunication PMR avec un réseau large bande fonctionnant en mode exclusivement paquets de type LTE ou WIMAX ; il est possible de transférer des données à très haut débit de façon à pouvoir proposer des fonctionnalités évoluées aux utilisateurs, par exemple des transferts de vidéos en mode streaming pouvant servir aux services de police. Des réseaux de radiocommunication tels que LTE ou WIMAX fonctionnent en mode tout IP ; ainsi, à la différence des réseaux 2G ou 3G où l'on distinguait les domaines de commutation de circuit et de commutation de paquets, tous les services sont ici offerts sur IP, y-compris ceux qui étaient auparavant offerts par le domaine circuit tels que la voix ou la visiophonie.

L'infrastructure selon l'invention est adaptée aux utilisateurs de réseau PMR puisqu'elle permet de répondre aux exigences de mission critique rencontrées par exemple lors d'une perte d'accès aux moyens de gestion centralisée dans des lieux difficiles d'accès. En effet, même si le canal centralisé de données est interrompu, les terminaux utilisateurs se trouvant dans la zone géographique déterminée (correspondant à la zone de résilience des réseaux PMR) couverte par le contrôleur de site peuvent communiquer entre eux via le canal local de données en passant par la passerelle radio et les deuxièmes moyens de rattachement au réseau de paquets. Cette modalité avantageuse permet donc d'assurer la communication entre différents terminaux utilisateurs d'une même zone géographique déterminée pour gérer une situation de crise.

Dans un état de fonctionnement nominal, deux canaux d'accès sont alloués à un terminal : un premier canal d'accès à l'application centralisée du moyen de gestion centralisé et un deuxième canal d'accès à l'application locale du contrôleur de site; le premier canal peut être utilisé seul mais on peut également envisager d'utiliser les deux canaux d'accès dans un état de fonctionnement nominal, les deux canaux d'accès étant de toute façon alloués au terminal dans l'état de fonctionnement nominal.

Il convient de noter que plusieurs canaux d'accès à l'application centralisée peuvent être utilisés simultanément.

L'infrastructure selon l'invention peut également présenter une ou plusieurs des caractéristiques ci-dessous, considérées individuellement ou selon toutes les combinaisons techniquement possibles :
- lesdits moyens de gestion centralisée comportent une base de données comportant des informations relatives au droit d'accès de terminaux utilisateurs au dit réseau professionnel de radiocommunication ;
- dans ledit état nominal, chaque terminal utilisateur communiquant situé dans la zone géographique déterminée et rattaché au dit contrôleur de site est relié simultanément à ladite application centralisée via ledit canal centralisé de données et à ladite application locale de communication via ledit canal local de données de sorte que ledit terminal utilisateur conserve uniquement ledit canal local de données lors du basculement de ladite infrastructure dans son état isolé ;
- dans ledit état nominal, chaque terminal utilisateur communiquant situé dans la zone géographique déterminée et rattaché au dit contrôleur de site est relié uniquement à ladite application centralisée via ledit canal centralisé de données, ledit canal local de donnée étant effectif lors du basculement de ladite infrastructure dans son état isolé ;
- ladite infrastructure est conforme à un standard de radiocommunication mobile de grande capacité ou à haut débit en mode tout IP de type LTE ou WIMAX ;
- ladite Infrastructure est conforme à un standard de radiocommunication mobile LTE,
   - lesdits moyens de rattachement centralisé étant formés par une entité PDN-GW « Packet Data Network Gateway »,
   - ladite base de données étant formée par une entité HSS « Home Subscriber Server »,
   - lesdits moyens de supervision centralisée étant formés par une entité de supervision système,
   - lesdits moyens de rattachement local étant formés par une deuxième entité PDN-GW « Packet Data Network Gateway »,
   - lesdits moyens d'authentification et de contrôle desdits terminaux utilisateurs étant réalisés par une entité MME « Mobility Management Entity »,
   - ladite passerelle de distribution étant formée par une entité S-GW « Serving Gateway »,
   - lesdits moyens de supervision locale étant formés par une entité de supervision site,
   - ladite au moins une station de base étant formée par une entité eNodeB « evolved NodeB » ;
   - lesdits moyens d'authentification et de contrôle des terminaux utilisateurs sont aptes à sélectionner une passerelle de distribution et des moyens de rattachement centralisé à un réseau centralisé de paquets qui serviront à mettre en oeuvre ledit canal centralisé de données passant par ledit canal d'accès centralisé ;
   - lesdits moyens d'authentification et de contrôle des terminaux utilisateurs sont aptes à sélectionner une passerelle de distribution et des moyens de rattachement local à un réseau local de paquets qui serviront à mettre en oeuvre ledit canal local de données passant par ledit canal d'accès local ;
   - ladite infrastructure comporte au moins deux contrôleurs de site aptes à gérer chacun une zone géographique déterminée, lesdits au moins deux contrôleurs de site étant aptes à communiquer l'un avec l'autre et chacun desdits contrôleurs de site étant apte à communiquer avec lesdits moyens de gestion centralisée ;
   - l'un au moins desdits réseaux de paquets est un réseau IP ;
   - lesdits moyens d'authentification et de contrôle comportent des moyens pour allouer dynamiquement ledit canal centralisé de données et ledit canal local de données.

L'invention a également pour objet un procédé d'accès d'un terminal utilisateur à au moins une application locale de communication et au moins une application centralisée au sein d'une infrastructure de réseau professionnel de radiocommunication, ladite infrastructure comportant :
- des moyens de gestion centralisée comportant :
   - au moins une application centralisée apte à communiquer avec une première application comprise dans ledit terminal,
   - des moyens de supervision centralisée aptes à détecter si ladite infrastructure est dans un état de fonctionnement nominal ou isolé, et
   - des moyens de rattachement centralisé à un réseau centralisé de paquets pour établir un accès entre ladite au moins une application centralisée et ladite première application lors d'un fonctionnement de ladite infrastructure détecté selon un état nominal ;
   - une base de données comportant des informations relatives au droit d'accès de terminaux utilisateurs au dit réseau professionnel de radiocommunication,
- un contrôleur de site d'une zone géographique déterminée comportant :
   - au moins une station de base apte à assurer la transmission et la réception radio avec des terminaux utilisateurs se trouvant dans au moins une cellule rattachée à ladite station de base ;
   - au moins une application locale de communication apte à communiquer avec une deuxième application comprise dans ledit terminal utilisateur ;
   - des moyens d'authentification et de contrôle des terminaux utilisateurs aptes à authentifier les terminaux utilisateurs appartenant au dit réseau professionnel ;
   - une passerelle de distribution assurant la réception et l'émission radio avec ladite au moins une station de base ; et
   - des moyens de rattachement local à un réseau local de paquets ;
   ledit procédé d'accès étant caractérisé en ce que lorsque ladite infrastructure se trouve dans un état de fonctionnement nominal, ledit procédé comporte les étapes suivantes :
   - authentifier ledit terminal utilisateur via lesdits moyens d'authentification et de contrôle dès l'arrivée dudit terminal utilisateur dans ladite cellule,
   - vérifier les droits d'accès dudit terminal utilisateur au dit réseau professionnel de radiocommunication via lesdits moyens d'authentification et de contrôle communiquant avec ladite base de données,
   - allouer un canal d'accès centralisé reliant ladite passerelle de distribution à ladite application centralisée via lesdits premiers moyens de rattachement centralisé; l'allocation dudit canal d'accès centralisé permettant d'allouer dynamiquement au dit terminal utilisateur un canal centralisé de données passant par ledit canal d'accès centralisé rattachant ledit terminal utilisateur aux dits moyens de rattachement centralisé via ladite passerelle de distribution,
   - allouer un canal d'accès local reliant ladite passerelle de distribution à ladite application locale de communication via lesdits deuxièmes moyens de rattachement local; l'allocation dudit canal d'accès local permettant d'allouer dynamiquement au dit terminal utilisateur un canal local de données passant par ledit canal d'accès local rattachant ledit terminal utilisateur aux dits moyens de rattachement local via ladite passerelle de distribution,
lesdits canaux d'accès centralisé et local étant accessibles dans un premier état de fonctionnement de l'infrastructure dit état nominal et seul ledit canal d'accès local étant accessible dans un second état de fonctionnement de l'infrastructure dit état isolé de sorte que ledit terminal utilisateur est apte à être rattaché uniquement aux dits moyens de rattachement local via ladite passerelle de distribution au moyen dudit canal local de données lorsque l'accès aux dits moyens de gestion centralisée est interrompu.

Le procédé selon l'invention peut également présenter une ou plusieurs des caractéristiques ci-dessous, considérées individuellement ou selon toutes les combinaisons techniquement possibles :
- ledit procédé comporte une étape de détection par des moyens de supervision locale appartenant au dit contrôleur de site d'une perte d'accès des terminaux utilisateurs aux dits moyens de gestion centralisée, lesdits moyens de supervision locale forçant le passage de l'état nominal à l'état isolé dans ledit contrôleur de site ;
- ledit procédé comporte une étape de détection par lesdits moyens de supervision locale d'une reprise d'accès des terminaux utilisateurs aux dits moyens de gestion centralisée, lesdits moyens de supervision locale forçant le passage de l'état Isolé à l'état nominal dans ledit contrôleur de site.

Pour la suite de la description en entend par mode actif (ou mode de communication), un mode dans lequel un terminal utilisateur mobile échange des données de communication avec le réseau via un canal de données utilisant un canal d'accès.

Lorsque ledit terminal utilisateur est en mode actif, sont alloués au terminal utilisateur :
- ledit canal d'accès centralisé,
- ledit canal d'accès local, et
- ledit canal centralisé de données et/ou ledit canal d'accès local.

Pour la suite de la description on entend par mode veille, un mode dans lequel un terminal utilisateur mobile n'échange pas de donnée avec le réseau mais possède un canal d'accès au contrôleur de site lui permettant de se faire attribuer un canal local de données lorsqu'il passe en mode actif. Il possède en outre, un canal d'accès aux dits moyens de gestion centralisée lui permettant de se faire attribuer un canal centralisé de données lorsqu'il passe en mode actif.

D'autres caractéristiques et avantages de l'infrastructure et du procédé de radiocommunication professionnelle selon l'invention ressortiront clairement de la description qui en est donnée ci-après, à titre indicatif et nullement limitatif, en référence aux figures annexées ci-jointes parmi lesquelles :
- la figure 1 représente une réalisation d'un réseau PMR selon l'état de la technique ;
- la figure 2 illustre un mode de réalisation d'une infrastructure de radiocommunication professionnelle conforme à l'invention ; et
- la figure 3 illustre un transfert de données entre une première zone géographique déterminée et une deuxième zone géographique déterminée réalisé au moyen d'une infrastructure de radiocommunication conforme à l'invention.

Pour des raisons de clarté, seuls les éléments essentiels pour la compréhension de l'invention ont été représentés, et ceci sans respect de l'échelle et de manière schématique.

La figure 1 a déjà été décrite pour illustrer un réseau PMR décrit dans l'état de la technique.

La figure 2 représente une infrastructure PMR de radiocommunication professionnelle 20 selon l'invention. A titre purement illustratif, les moyens décrits dans ce mode de réalisation font référence à la terminologie utilisée dans une technologie de type LTE. Il est entendu que cette infrastructure n'est aucunement limitée à un tel standard de radiocommunication et peut s'appliquer à tout type de standard de radiocommunication à large bande en mode paquets, par exemple la technologie WIMAX.

L'infrastructure 20 comporte :
- des moyens de gestion centralisée 21, et
- un contrôleur de site 22 par site Z.

Un site Z peut être défini comme une zone géographique prédéfinie que l'on veut protéger de manière résiliente. Cette zone est composée d'au moins une cellule 29 et peut comporter une pluralité de cellules (ici la zone Z est composée d'une seule cellule confondue avec la zone Z).

Les moyens de gestion centralisée 21 comportent :
- une pluralité d'applications centralisées 25 (par exemple des applications de communication vocale ou de transmission vidéo) ;
- des moyens de rattachement centralisé 26 à un réseau centralisé de paquets (typiquement un réseau IP) tels qu'une entité PDN-GW « Packet Data Network Gateway » en technologie LTE; l'entité PDN-GW forme un premier point d'ancrage vers le réseau IP («Internet Protocol» en anglais) ; on notera qu'il est possible d'avoir plusieurs PDN-GW 26 selon le type de données à transmettre ou selon les services auxquels on souhaite accéder ;
- une base de données 27 statique comportant des informations relatives au droit d'accès de terminaux utilisateurs à un réseau professionnel de radiocommunication telle qu'un serveur HSS « Home Subscriber Server » en technologie LTE ; et
- des moyens de supervision centralisée 51 aptes à détecter de manière fiable une perte d'accès de terminaux utilisateurs au contrôleur de site 22 décrit ci-dessous ; les moyens de supervision centralisée 51 sont par exemple formés par une entité de supervision système.

Le contrôleur de site 22 comporte :
- une station de base 28 apte à assurer la transmission et la réception radio avec des terminaux utilisateurs 23 du réseau PMR se trouvant dans une cellule 29 rattachée à la station de base 28 et se trouvant dans la zone Z ; la station de base est par exemple une entité eNodeB en technologie LTE ;
- au moins une application, dite application locale de communication 30;
- des moyens d'authentification et de contrôle 31 aptes à authentifier les terminaux utilisateurs appartenant au réseau professionnel 20 et apte à gérer des canaux de données 34 et 35 ainsi que des canaux d'accès A et B sur lesquels nous reviendrons dans la suite de la description ; les moyens d'authentification et de contrôle 31 sont par exemple une entité MME « Mobility Management Entity » en technologie LTE ;
- une passerelle de distribution 32 assurant la réception et l'émission radio avec la station de base 28; la passerelle de distribution 32 est par exemple une entité S-GW « Serving Gateway » en technologie LTE ;
- des moyens de rattachement local 33 à un réseau local de paquets, typiquement un réseau IP, tels qu'une entité PDN-GW « Packet Data Network Gateway » en technologie LTE formant un second point d'ancrage vers le réseau IP ;
- des moyens de supervision locale 50 détectant de manière fiable une perte d'accès de terminaux utilisateurs aux moyens de gestion centralisée 21 ; les moyens de supervision locale 50 sont par exemple une entité de supervision site ;
- une base de données locale 52 optionnelle.

Il convient de noter que chaque terminal 23 comporte :
- une première application 25T apte à communiquer avec les applications centralisées 25 des moyens de gestion centralisée 21, et
- une deuxième application 30T apte à communiquer avec l'application locale de communication 30 du contrôleur de site 22.

Les applications 25T et 30T communiquent respectivement avec les applications 25 et 30, leur liaison étant réalisée au moyen des canaux d'accès A et B.

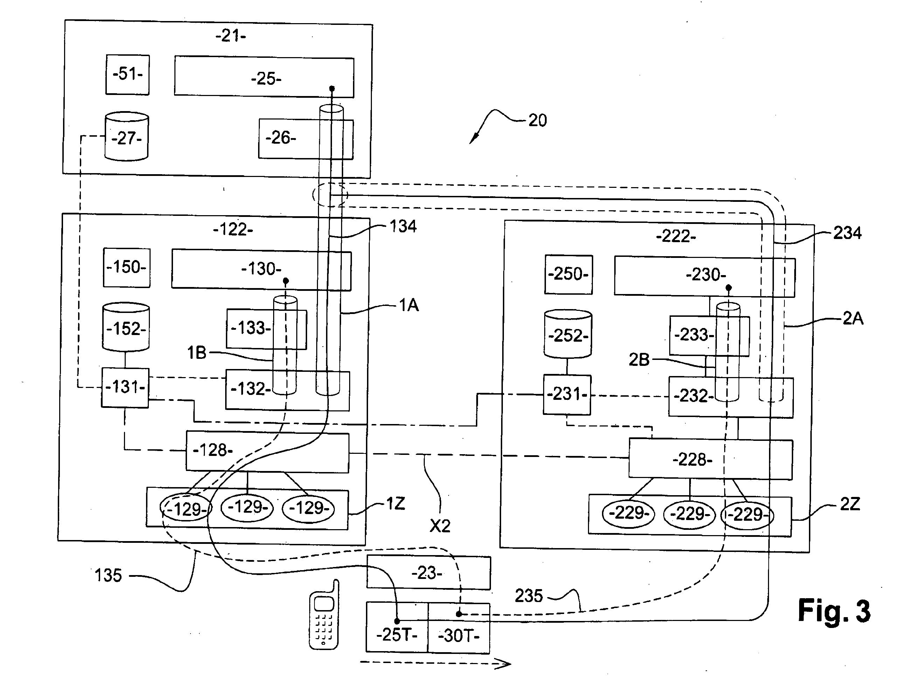

On notera que les moyens de gestion centralisée 21 couvrent généralement plusieurs sites (cf. figure 3 par la suite) et sont donc associés à plusieurs contrôleurs de site 22.

On constate que selon l'invention, l'infrastructure 20 comporte :
- au moins un premier point d'ancrage réseau PDN-GW 26 (les moyens de rattachement centralisé 26) à un niveau haut centralisé (i.e. susceptible de couvrir plusieurs sites) et ;
- au moins une passerelle S-GW 32 et au moins un deuxième point d'ancrage réseau PDN-GW 33 (les moyens de rattachement local 33) situés au niveau site.

Il convient de noter que les moyens d'authentification et de contrôle MME 31 sont non seulement responsables de l'authentification des terminaux utilisateurs à partir des informations des terminaux recueillies de la base de données HSS 27 mais ces moyens MME 31 permettent également de sélectionner une passerelle de distribution S-GW 32 (dans le cas d'une pluralité de passerelles de distribution S-GW 32) et des moyens de rattachement centralisé PDN-GW 26 à un réseau IP (en cas de pluralité de moyens de rattachement centralisé PDN-GW 26) afin d'établir un canal d'accès centralisé A dédié à un terminal 23 au moment de son arrivée dans la zone Z et de son accès aux moyens de gestion centralisée 21.

Les moyens MME 31 permettent également d'établir un canal d'accès local B passant par la passerelle de distribution 32 et les moyens de rattachement local 33 au réseau IP, ce canal d'accès B étant dédié au terminal 23 lors de son arrivée dans la zone Z et de son accès au contrôleur de site 22.

En d'autres termes, dès que le terminal 23 accède aux moyens de gestion centralisée 21 et au contrôleur de site 22 (que le terminal soit en mode veille ou « Idle » ou en mode actif (communication)), les canaux d'accès A et B sont établis.

Lors d'une demande de communication par un terminal utilisateur 23 situé dans la zone géographique déterminée Z, les moyens de supervision centralisée 51 et locale 50 s'assurent que l'état des transmissions est possible vers et en dehors du site. Si ces transmissions sont possibles, l'infrastructure 20 est alors dans un état de fonctionnement dit de fonctionnement nominal.

Dans cet état de fonctionnement nominal de l'infrastructure, les applications 25T et 30T du terminal 23 peuvent accéder respectivement aux applications centralisée 25 et locale 30 :
- soit de manière alternée : dans ce cas, le terminal 23 accède en nominal aux applications centralisées 25 qui dans ce cas sont des applications de communication et permettent en fonctionnement nominal d'assurer notamment le routage et la commutation des données de communication entre les différents terminaux, et conserve la possibilité d'accéder via le canal d'accès local B à l'application locale de communication 30 qui en état de fonctionnement isolé de l'infrastructure permet d'assurer le routage et la commutation des données de communications entre les différents terminaux présents dans la zone géographique Z;
- soit de manière simultanée : dans ce cas, le terminal 23 accède à la fois aux applications centralisées 25 et à l'application locale de communication 30, les applications centralisées 25 étant des applications dites secondaires ; dans ce cas, seule l'application locale de communication 30 permet d'assurer le routage et la commutation des données de communications entre les différents terminaux du réseau PMR en fonctionnement nominal et des différents terminaux de la zone géographique Z en fonctionnement isolé (ou local).

En cas d'utilisation d'une application centralisée 25 et/ou d'une application locale de communication 30 par le terminal 23, les moyens MME 31 commandent l'établissement de canaux de communication de données centralisé 34 et local 35 alloués de façon dynamique au terminal 23. Il convient de noter que le canal centralisé de données 34 passe par le canal d'accès centralisé A et le canal local de données 35 passe par le canal d'accès local B, les canaux d'accès A et B étant toujours pré-établis.

Lorsque le terminal utilisateur 23 accède en mode simultané aux applications centralisée 25 et locale 30 en fonctionnement nominal, le terminal 23 est rattaché :
- aux moyens de rattachement centralisé PDN-GW 26 via le canal centralisé de données 34 alloué dynamiquement passant par le canal d'accès centralisé A, et
- aux moyens de rattachement local PDN-GW 33 via le canal local de données 35 alloué dynamiquement passant par le canal d'accès local B.

En fonctionnement nominal, le terminal 23 en mode veille ou « Idle » est attaché au réseau via les canaux d'accès A et B établis. Lorsque le terminal 23 passe en mode "communication", le canal de communication de données 34 passant par le canal d'accès A et le canal local de données 35 passant par le canal d'accès local B sont établis. En passant du mode veille au mode « communication », les données de communications sont transmises dans les canaux 34 et 35 via les canaux d'accès A et B.

Lorsque le terminal utilisateur 23 accède en mode alterné aux applications centralisées 25 et locale 30 en fonctionnement nominal, le terminal 23 est rattaché aux moyens de rattachement centralisé PDN-GW 26 via le canal centralisé de données 34 alloué dynamiquement passant par le canal d'accès centralisé A. En fonctionnement nominal, le canal d'accès local B reste pré-alloué de sorte que lors d'un basculement en fonctionnement local de l'infrastructure, le terminal utilisateur 23 s'attache aux moyens de rattachement local PDN-GW 33 via le canal local données 35 alloué dynamiquement passant par le canal d'accès local B.

La présence du canal d'accès B pré-alloué va permettre de faciliter le basculement de l'infrastructure 20 de l'état nominal vers un deuxième état de fonctionnement, dit état isolé.

L'infrastructure 20 peut ainsi présenter un autre état de fonctionnement dit de fonctionnement isolé permettant d'assurer l'exigence de mission critique propre aux infrastructures PMR. Cet état de fonctionnement isolé se présente lorsque le transfert de données via le canal centralisé de données 34 est interrompu (typiquement une perte de l'accès réseau via le premier point d'ancrage réseau PDN-GW 26 ou une coupure du canal centralisé 34).

Le passage d'un état de fonctionnement nominal à un état de fonctionnement isolé est détecté par les moyens de supervision locale 50 du site qui sont aptes à détecter une perte d'accès du terminal 23 aux moyens de gestion centralisée 21. Dans ce cas de figure, les moyens de supervision locale 50 informent le contrôleur 22 du passage selon l'état de fonctionnement isolé et forcent l'application locale de communication 30, les moyens d'authentification et de contrôle 31, la passerelle de distribution S-GW 32 et les moyens de rattachement local PDN-GW 33 à fonctionner selon l'état de fonctionnement isolé ; les communications vers l'extérieur du site sont interdites tant que les moyens de supervision locale 50 n'indiquent pas le rétablissement de l'état nominal.

On notera que les moyens de supervision centralisée 51 sont également aptes à détecter une perte d'accès du terminal 23 au contrôleur de gestion 22 ; ce faisant, les moyens de supervision centralisée 51 informent les applications centralisées 25 de sorte que l'accès du terminal 23 aux applications centralisées 25 est interrompue. En général, une information est également transmise par les applications centralisées 25 à l'opérateur du réseau pour lui signaler la perte d'accès.

Dans l'état de fonctionnement isolé, le canal d'accès A ne peut plus être utilisé. Deux situations sont alors possibles lors du passage du fonctionnement nominal au fonctionnement isolé :
- soit l'accès aux applications 25 et 30 est en mode alterné ; dans ce cas, en fonctionnement isolé, l'application locale de communication 30 devient l'application de communication principale qui permet d'assurer le routage et la commutation des données de communications entre les différents terminaux présents dans le site et « prend » la main de sorte que tous les terminaux 23 rattachés au site ont accès à l'application locale de communication 30. Dans ce mode, l'application locale de communication 30 permet une communication minimale entre les terminaux du site Z (on pourra noter que dans ce cas, le canal centralisé de données 34 est inutilisable) ;
- soit l'accès aux applications 25 et 30 est en mode simultané ; dans ce cas, en fonctionnement isolé, l'application locale de communication 30 continue de gérer normalement les terminaux 23 rattachés au site ; elle peut également informer ces terminaux 23 que les applications centralisées 25 (services secondaires non essentiels) ne sont plus accessibles.

Il convient de noter qu'en parallèle chaque terminal 23 peut lui-même détecter la perte d'accès aux applications centralisées 25. Ainsi, chaque terminal 23 peut, par exemple, tenter de se reconnecter.

Dans cet état de fonctionnement isolé, le terminal utilisateur 23 est rattaché uniquement aux moyens de rattachement local PDN-GW 33 au moyen du canal local de données 35 utilisant le canal d'accès local B. Ce rattachement permet au terminal 23 d'avoir accès à l'application locale de communication 30 qui constitue une application a minima permettant au terminal de transmettre au moins des données de type mission critique comme la voix aux autres terminaux du site Z. Cet état de fonctionnement isolé est viable uniquement parce que le contrôleur de site 22 d'une zone géographique déterminée Z comporte :
- des moyens d'authentification et de contrôle MME 31 des terminaux utilisateurs 23 (seuls les terminaux déjà attaches au réseau et présents sous la couverture du site seront 'connus' des moyens d'authentification et de contrôle MME 31) ;
- une passerelle de distribution S-GW 32 assurant la réception et l'émission radio avec la station de base 28 ;
- des moyens de rattachement local PDN-GW 33 à un réseau de paquets IP ;
- des moyens de supervision locale 50 aptes à détecter si ladite infrastructure 20 est dans un état de fonctionnement nominal ou isolé.

Lorsque l'infrastructure 20 est en état de fonctionnement isolé et qu'un terminal utilisateur non authentifié émet une requête auprès des moyens d'authentification et de contrôle 31 pour s'attacher au site, deux options sont possibles.

Selon une première option, le contrôleur de site 22 peut refuser le rattachement.

Selon une deuxième option qui suppose la présence de la base de données locale 52, les moyens d'authentification et de contrôle 31 et la base de données locale 52 attribuent un identifiant temporaire au terminal 23.

Lorsqu'un identifiant temporaire a été attribué au terminal 23 pendant l'état de fonctionnement isolé de l'infrastructure 20, lors du ré-établissement du fonctionnement nominal de l'infrastructure 20 les moyens d'authentification et de contrôle 31 forcent le terminal 23 à s'authentifier de nouveau auprès desdits moyens MME 31 et de la base de données statique 27.

Lorsque l'infrastructure 20 passe d'un état de fonctionnement isolé à un état de fonctionnement nominal, les moyens de supervision locale 50 détectent et forcent le passage de l'ensemble du site dans un état de fonctionnement nominal.

Dans ce cas, les moyens de supervision locale 50 forcent l'application locale de communication 30, les moyens d'authentification et de contrôle 31, la passerelle de distribution S-GW 32 et les moyens de rattachement local PDN-GW 33 à fonctionner selon l'état nominal.

On notera que les moyens de supervision centralisée 51 sont aptes à détecter le retour en fonctionnement nominal. Dans ce cas, les moyens de supervision centralisée 51 informent les applications centralisées 25 qu'elles peuvent alors communiquer de nouveau avec le site et les terminaux 23 rattachés au site.

Dans ce cas, les applications centralisées 25 peuvent effectuer une synchronisation en réalisant par exemple une mise à jour des applications locales 30.

Si l'infrastructure 20 a fonctionnée selon un état isolé durant une période importante, alors :
- la base de données statique 27 demande aux moyens d'authentification et de contrôle 31 de se re-synchroniser avec chacun des terminaux ; ou
- les moyens de supervision locale 50 imposent une re-synchronisation de tous les terminaux.

En outre, lorsque l'infrastructure 20 passe d'un état de fonctionnement isolé à un état de fonctionnement nominal et que les applications centralisées 25 et l'application locale de communication 30 sont accessibles en mode :
- alterné: les applications centralisées 25 prennent le contrôle sur l'application locale de communication 30 et informent tous les terminaux utilisateurs attachés au contrôleur de site 22 d'un tel fonctionnement en mode alterné de façon à basculer les communications de l'application locale 30 aux applications centralisées 25. Si le fonctionnement selon un état isolé a été long, il peut être nécessaire de re-synchroniser un certain nombre d'actions entre l'application centralisée 25 et les applications 25T et 30T du terminal 23, notamment par rapport à des changements de ressources du réseau global (PTT, liste des communications de groupe modifiées....) ; en outre, au cours du fonctionnement de l'infrastructure 20 selon un état isolé, le canal d'accès centralisé A et le canal centralisé de données 34 peuvent avoir disparu ou seul le canal centralisé de données 34 peut avoir disparu. Si seul le canal centralisé de données 34 à disparu, le terminal 23 va tenter de rétablir le canal centralisé de données 34. En revanche, si le canal d'accès centralisé A à également disparu, les moyens d'authentification et de contrôle 31 vont rétablir dans un premier temps le canal d'accès centralisé A pour ensuite établir le canal centralisé de données 34 ;
- simultané:
   o l'application locale de communication 30 continue de gérer normalement les terminaux 23 attachés localement au site; elle peut en outre informer ces terminaux 23 que des services secondaires offerts par les applications centralisées 25 sont de nouveau accessibles,
   o les terminaux 23 peuvent individuellement se resynchroniser sur les services offerts par les applications centralisées 25 (ou les applications centralisées 25 peuvent resynchroniser les terminaux 23).

En outre, si un terminal 23 a obtenu un identifiant temporaire au cours de l'état de fonctionnement local, les moyens MME 31 forcent le terminal à se ré-authentifier auprès de la base de données 27 située dans les moyens de gestion centralisés 21 afin d'obtenir une authentification valide sur l'ensemble du réseau.

Contrairement aux technologies 2G qui proposent deux domaines de commutation, à savoir un domaine de commutation de circuit et un autre domaine de commutation de paquets, l'infrastructure 20 selon l'invention fonctionne uniquement en mode paquets. Cette modalité avantageuse permet d'augmenter le débit des informations qui sont transmises et de gérer des protocoles et services standards interopérables (TCP/UDP,...). Grâce à cette infrastructure 20 fonctionnant uniquement en mode paquets, tous les services sont offerts sur IP y compris ceux qui étaient auparavant offerts par le domaine circuit tels que la voix, la visiophonie, le SMS ou encore tous les services de téléphonie.

La figure 3 illustre une infrastructure 20 de radiocommunication professionnelle fonctionnant uniquement en mode paquets et identique à l'infrastructure 20 de la figure 2 à la différence que deux sites 1Z et 2Z sont représentés de façon à pouvoir illustrer la mobilité entre ces deux sites. Les mêmes éléments représentés de façon unitaire sur chaque figure, à savoir la figure 2 et la figure 3 portent des références identiques. A contrario, les mêmes éléments représentés de façon unitaire sur la figure 2 par la référence X et de façon plurale sur la figure 3 sont désignés par des références 1X et 2X.

L'infrastructure 20 représentée sur la figure 3 comporte des moyens de gestion centralisée 21, un premier contrôleur de site 122 d'une première zone géographique déterminée ou site 1Z comportant trois cellules 129 et un deuxième contrôleur de site 222 d'une deuxième zone géographique déterminée ou site 2Z comportant trois cellules 229.

Les moyens de gestion centralisée 21 comportent :
- une pluralité d'applications centralisées 25 ;
- des moyens de rattachement centralisé 26 à un réseau centralisé de paquets tels qu'une entité PDN-GW « Packet Data Network Gateway » en technologie LTE; et
- une base de données 27 comportant des informations relatives au droit d'accès de terminaux utilisateurs à un réseau professionnel de radiocommunication telle qu'un serveur HSS « Home Subscriber Server » en technologie LTE ;
- des moyens de supervision centralisée 151 aptes à détecter de manière fiable une perte d'accès de terminaux utilisateurs au contrôleur de site 122, les moyens de supervision centralisée 151 sont par exemple formés par une entité de supervision système.

Le premier contrôleur de site 122 servant la première zone 1Z comporte :
- une première station de base 128 ; la première station de base 128 est par exemple une entité eNodeB en technologie LTE ;
- une première application locale 130 de communication minimale ;
- des premiers moyens d'authentification et de contrôle 131 des terminaux utilisateurs ; les premiers moyens d'authentification et de contrôle 131 sont par exemple une entité MME « Mobility Management Entity » en technologie LTE ;
- une première passerelle de distribution 132 ; la première passerelle de distribution 132 est par exemple une entité S-GW « Serving Gateway » en technologie LTE ;
- des premiers moyens de rattachement local 133 à un premier réseau local de paquets tels qu'une entité PDN-GW « Packet Data Network Gateway » en technologie LTE ;
- des premiers moyens de supervision locale 150 détectant de manière fiable une perte d'accès de terminaux utilisateurs aux moyens de gestion centralisée 21 ; les premiers moyens de supervision locale 150 sont par exemple formés par une entité de supervision site.

Le deuxième contrôleur de site 222 servant la deuxième zone 2Z comporte :
- une deuxième station de base 228 ; la deuxième station de base 228 est par exemple une entité eNodeB en technologie LTE ;
- une deuxième application locale 230 de communication minimale ;
- des deuxièmes moyens d'authentification et de contrôle 231 des terminaux utilisateurs ; les deuxièmes moyens d'authentification et de contrôle 231 sont par exemple une entité MME « Mobility Management Entity » en technologie LTE ;
- une deuxième passerelle de distribution 232 ; la deuxième passerelle de distribution 232 est par exemple une entité S-GW « Serving Gateway » en technologie LTE ;
- des deuxièmes moyens de rattachement 233 à un deuxième réseau local de paquets tels qu'une entité PDN-GW « Packet Data Network Gateway » en technologie LTE ;
- des deuxièmes moyens de supervision locale 250 détectant de manière fiable une perte d'accès de terminaux utilisateurs aux moyens de gestion centralisée 21 ; les deuxièmes moyens de supervision locale 250 sont par exemple formés par une entité de supervision site..

Cette figure 3 est représentée de façon à pouvoir illustrer un transfert de données de communication lorsque le terminal utilisateur 23 est en mode de communication et un transfert de contexte tel que des données d'authentification et de ressources disponibles, lorsque le terminal utilisateur 23 est en mode veille (IDLE en anglais).

Un transfert de données de communication peut intervenir entre le contrôleur de site 122 et le contrôleur de site 222 (ou inversement) lorsqu'un terminal utilisateur 23 en mode communication passe de la première zone géographique 1Z à la deuxième zone géographique 2Z (ou inversement).

Un transfert de contexte peut intervenir entre le contrôleur de site 122 et le contrôleur de site 222 (ou inversement) lorsqu'un terminal utilisateur 23 en mode veille passe de la première zone géographique 1Z à la deuxième zone géographique 2Z (ou inversement).

De façon générale, lorsque le terminal utilisateur 23 se rattache à l'infrastructure 20 via l'une des cellules 129 ou 229, lors de l'authentification du terminal les moyens d'authentification et de contrôle 131 ou 231 s'interfacent à la base de données 27 afin de mettre à jour la localisation du terminal utilisateur 23 et obtenir le profil du terminal utilisateur 23.

Dans notre exemple, lorsque le terminal utilisateur 23 est en mode veille et passe de la première zone géographique déterminée 1Z à la deuxième zone géographique déterminée 2Z, les deuxièmes moyens d'authentification et de contrôle 231 allouent un identifiant temporaire, par exemple de type T-IMSI (pour «Temporary International Mobile Subscriber Identity » en anglais) au terminal utilisateur 23 et vérifient auprès des premiers moyens d'authentification et de contrôle 131 les droits d'accès du terminal utilisateur 23 au réseau professionnel de radiocommunication. Ce procédé est transparent pour l'utilisateur mais pas pour le terminal utilisateur 23 (changement d'identifiant).

Par ailleurs, lorsque le terminal utilisateur 23 arrive dans la première zone 1Z et accède aux moyens de gestion 21 et au contrôleur de site 122, un premier canal d'accès centralisé 1 A lui est alloué et un premier canal d'accès local 1 B lui est également alloué par les premiers moyens d'authentification et de contrôle 131. En mode communication, le terminal 23 peut communiquer via un premier canal centralisé de données 134 passant par le canal d'accès centralisé 1A et/ou un premier canal local de données 135 alloué dynamiquement passant par le premier canal d'accès local 1 B. Lorsque le terminal 23 passe de la première zone géographique déterminée 1Z à la deuxième zone géographique déterminée 2Z un transfert de données entre la première station de base 128 et la deuxième station de base 228 est réalisé via un lien de transfert de type X2 ou S1 intersites en technologie LTE. Il convient de noter que ceci est possible uniquement pour les canaux 1 B et 2B. Ce transfert de données peut être réalisé conformément à la technologie LTE connu de l'homme du métier.

Il convient de noter que selon l'invention, au cours de ce passage de la première zone géographique déterminée 1Z à la deuxième zone géographique déterminée 2Z, les deuxièmes moyens d'authentification et de contrôle 231 allouent au terminal utilisateur 23 :
- un deuxième canal d'accès centralisé 2A passant par la deuxième passerelle de distribution 232, les moyens de rattachement centralisé 26 et l'application centralisé 25, il convient de noter que lors de l'allocation de ce deuxième canal d'accès centralisé 2A :
   o si un transfert de type audio est réalisé alors une perte de données se produit, cette perte de données étant non perceptible pour l'utilisateur ;
   o si un transfert de fichiers est réalisé alors aucune perte de données ne se produit ;
- un deuxième canal d'accès local 2B reliant la deuxième passerelle de distribution 232, les deuxièmes moyens de rattachement local 233 et la deuxième application locale de communication 230. L'allocation du deuxième canal d'accès local 2B peut se faire avec une faible ou une forte synchronisation entre les différentes applications 130 et 230.

Ainsi, en fonctionnement nominal le terminal 23 peut continuer à utiliser, via un deuxième canal centralisé de données 234 passant par le deuxième canal d'accès centralisé 2A, les applications centralisées 25.

Le terminal utilisateur 23 peut en outre utiliser, via un deuxième canal local de données 235 passant par le deuxième canal d'accès local 2B, la deuxième application locale de communication 230.

Lorsque le transfert de données entre le premier contrôleur de site 122 et le deuxième contrôleur de site 222 est finalisé, tout le contexte lié à la communication est transféré au contrôleur de site 222.

A titre d'exemple, grâce à ce procédé, lorsqu'une vidéo embarquée dans un véhicule (non représenté) transmet, en mode streaming, des vidéos de haute définition à l'application centralisée 25 et que le véhicule passe de la première zone de couverture 1Z à la deuxième zone de couverture 2Z, il est possible de réaliser un transfert de données entre la première station de base 128 et la deuxième station de base 228 de façon à ne pas interrompre la transmission à l'application centralisée 25.

De façon générale, on peut noter qu'à l'état nominal le réseau centralisé de paquets et le réseau local de paquets peuvent être physiquement le même ou interconnectés. Un découpage est réalisé lors du passage dans un état isolé.

En d'autres termes, l'invention confère une mobilité importante pour les réseaux de type PMR en profitant de la mobilité offerte par les réseaux de type LTE ou WIMAX. En effet, les terminaux utilisateurs peuvent utiliser des standard de radiocommunication mobile implantés et accessibles dans de nombreuses zones géographiques sans nécessité pour autant une infrastructure hardware conséquente.

De façon comparative aux infrastructures de radiocommunication professionnelle actuelles, cette infrastructure de radiocommunication professionnelle assure une communication a minima dans le site lors du fonctionnement de l'infrastructure en local. En outre, cette infrastructure propose des débits d'ordre supérieur, un bon niveau de qualité de service QoS pour ses abonnés et assure une continuité de flux en mobilité.

## Revendications

1. Infrastructure (20) de réseau professionnel de radiocommunication fonctionnant en mode paquets, ladite infrastructure (20) comportant un contrôleur de site (22) d'une zone géographique déterminée (Z) comportant au moins une station de base (28) apte à assurer la transmission et la réception radio avec au moins un terminal utilisateur (23) se trouvant dans au moins une cellule (29) rattachée à ladite station de base (28), ladite infrastructure (20) comportant en outre des moyens de gestion centralisée (21) comportant :
- au moins une application centralisée (25) apte à communiquer avec une première application (25T) comprise dans ledit terminal (23);
- des moyens de supervision centralisée (51) aptes à détecter si ladite infrastructure (20) est dans un état de fonctionnement nominal ou isolé; et
- des moyens de rattachement centralisé (26) à un réseau centralisé de paquets pour établir un accès entre ladite au moins une application centralisée (25) et ladite première application (25T) lors d'un fonctionnement de ladite infrastructure (20) détecté selon un état nominal ;
ledit contrôleur de site (22) comportant :
- au moins une application locale de communication (30) apte à communiquer avec une deuxième application (30T) comprise dans ledit terminal utilisateur (23);
- des moyens de supervision locale (50) aptes à détecter si ladite infrastructure (20) est dans un état de fonctionnement nominal ou isolé;
- des moyens d'authentification et de contrôle (31) de terminaux utilisateurs aptes à authentifier les terminaux utilisateurs appartenant au dit réseau professionnel ;
- une passerelle de distribution (32) assurant la réception et l'émission radio avec ladite au moins une station de base (28) ; et
- des moyens de rattachement local (33) à un réseau local de paquets pour établir un accès entre ladite application locale de communication (30) et ladite deuxième application (30T) lors d'un fonctionnement de ladite infrastructure (20) détecté selon un état isolé ;
ladite infrastructure (20) étant **caractérisée en ce que** :
- lorsque ladite infrastructure (20) se trouve dans un état de fonctionnement nominal, est alloué à chaque terminal utilisateur (23) situé dans la zone géographique déterminée et rattaché au dit contrôleur de site (22) :
- un canal d'accès centralisé (A) reliant ladite passerelle de distribution (32) à ladite application centralisée (25) via lesdits premiers moyens de rattachement (26), ledit terminal utilisateur (23) étant apte à être rattaché aux dits premiers moyens de rattachement (26) via ladite passerelle de distribution (32) au moyen d'un canal centralisé de données (34) qui lui est alloué dynamiquement, ledit canal centralisé de données (34) passant par ledit canal d'accès centralisé (A) ;
- un canal d'accès local (B) reliant ladite passerelle de distribution (32) à ladite application locale de communication (30) via lesdits deuxièmes moyens de rattachement (33), ledit terminal utilisateur (23) étant apte à être rattaché aux dits deuxièmes moyens de rattachement (33) via ladite passerelle de distribution (32) au moyen d'un canal local de données (35) qui lui est alloué dynamiquement, ledit canal local de données (35) passant par ledit canal d'accès local (B) ;
- lorsque ladite infrastructure (20) est dans un état de fonctionnement isolé au cours duquel l'accès aux dits moyens de gestion centralisée (21) est interrompu, est alloué à chaque terminal utilisateur (23) situé dans la zone géographique déterminée et rattaché au dit contrôleur de site (22) uniquement ledit canal d'accès local (B), ledit terminal utilisateur (23) étant apte à être rattaché aux dits deuxièmes moyens de rattachement (33) via ladite passerelle de distribution (32) au moyen dudit canal local de données (35) qui lui est alloué dynamiquement et passant par ledit canal d'accès local (B).

2. Infrastructure de réseau professionnel de radiocommunication (20) selon la revendication précédente **caractérisée en ce que** lesdits moyens de gestion centralisée (21) comportent une base de données (27) comportant des informations relatives au droit d'accès de terminaux utilisateurs au dit réseau professionnel de radiocommunication.

3. Infrastructure de réseau professionnel de radiocommunication (20) selon l'une des revendications précédentes **caractérisée en ce que** dans ledit état nominal, chaque terminal utilisateur (23) communiquant situé dans la zone géographique déterminée et rattaché au dit contrôleur de site (22) est relié simultanément à ladite application centralisée (25) via ledit canal centralisé de données (34) et à ladite application locale de communication (30) via ledit canal local de données (35) de sorte que ledit terminal utilisateur (23) conserve uniquement ledit canal local de données (35) lors du basculement de ladite infrastructure (20) dans son état isolé.

4. Infrastructure de réseau professionnel de radiocommunication (20) selon l'une des revendications 1 à 2 **caractérisée en ce que**, dans ledit état nominal, chaque terminal utilisateur (23) communiquant situé dans la zone géographique déterminée et rattaché au dit contrôleur de site (22) est relié uniquement à ladite application centralisée (25) via ledit canal centralisé de données (34), ledit canal local de donnée (35) étant effectif lors du basculement de ladite infrastructure (20) dans son état isolé.

5. Infrastructure de réseau professionnel de radiocommunication (20) selon l'une des revendications précédentes **caractérisée en ce qu'**elle est conforme à un standard de radiocommunication mobile de grande capacité ou à haut débit en mode tout IP de type LTE ou WIMAX.

6. Infrastructure de réseau professionnel de radiocommunication (20) selon l'une des revendications 1 à 4 et la revendication 5 **caractérisée en ce qu'**elle est conforme à un standard de radiocommunication mobile LTE,
- lesdits moyens de rattachement centralisé (26) étant formés par une entité PDN-GW « Packet Data Network Gateway »,
- ladite base de données (27) étant formée par une entité HSS « Home Subscriber Server »,
- lesdits moyens de supervision centralisée (51) étant formés par une entité de supervision système,
- lesdits moyens de rattachement local (33) étant formés par une deuxième entité PDN-GW « Packet Data Network Gateway »,
- lesdits moyens d'authentification et de contrôle (31) desdits terminaux utilisateurs étant réalisés par une entité MME « Mobility Management Entity »,
- ladite passerelle de distribution (32) étant formée par une entité S-GW « Serving Gateway »,
- lesdits moyens de supervision locale (50) étant formés par une entité de supervision site,
- ladite au moins une station de base (28) étant formée par une entité eNodeB « evolved NodeB ».

7. Infrastructure de réseau professionnel de radiocommunication (20) selon l'une des revendications précédentes **caractérisée en ce que** lesdits moyens d'authentification et de contrôle (31) des terminaux utilisateurs sont aptes à sélectionner une passerelle de distribution et des moyens de rattachement centralisé à un réseau centralisé de paquets qui serviront à mettre en oeuvre ledit canal centralisé de données (34) passant par ledit canal d'accès centralisé (A).

8. Infrastructure de réseau professionnel de radiocommunication (20) selon l'une des revendications précédentes **caractérisée en ce que** lesdits moyens d'authentification et de contrôle (31) des terminaux utilisateurs sont aptes à sélectionner une passerelle de distribution et des moyens de rattachement local à un réseau local de paquets qui serviront à mettre en oeuvre ledit canal local de données (35) passant par ledit canal d'accès local (B).

9. Infrastructure de réseau professionnel de radiocommunication (20) selon l'une des revendications précédentes **caractérisée en ce qu'**elle comporte au moins deux contrôleurs de site (122, 222) aptes à gérer chacun une zone géographique déterminée, lesdits au moins deux contrôleurs de site (122, 222) étant aptes à communiquer l'un avec l'autre et chacun desdits contrôleurs de site (122, 222) étant apte à communiquer avec lesdits moyens de gestion centralisée (21).

10. Infrastructure de réseau professionnel de radiocommunication (20) selon l'une des revendications précédentes **caractérisée en ce que** l'un au moins desdits réseaux de paquets est un réseau IP.

11. Infrastructure de réseau professionnel de radiocommunication (20) selon l'une des revendications précédentes **caractérisée en ce que** lesdits moyens d'authentification et de contrôle (31) comportent des moyens pour allouer dynamiquement ledit canal centralisé de données (34) et ledit canal local de données (35).

12. Procédé d'accès d'un terminal utilisateur (23) à au moins une application locale de communication (30) et au moins une application centralisée (25) au sein d'une infrastructure (20) de réseau professionnel de radiocommunication, ladite infrastructure comportant :
- des moyens de gestion centralisée (21) comportant :
- au moins une application centralisée (25) apte à communiquer avec une première application (25T) comprise dans ledit terminal (23),
- des moyens de supervision centralisée (51) aptes à détecter si ladite infrastructure (20) est dans un état de fonctionnement nominal ou isolé, et
- des moyens de rattachement centralisé (26) à un réseau centralisé de paquets pour établir un accès entre ladite au moins une application centralisée (25) et ladite première application (25T) lors d'un fonctionnement de ladite infrastructure (20) détecté selon un état nominal ;
- une base de données (27) comportant des informations relatives au droit d'accès de terminaux utilisateurs au dit réseau professionnel de radiocommunication,
- un contrôleur de site (22) d'une zone géographique déterminée comportant :
- au moins une station de base (28) apte à assurer la transmission et la réception radio avec des terminaux utilisateurs se trouvant dans au moins une cellule (29) rattachée à ladite station de base (28) ;
- au moins une application locale de communication (30) apte à communiquer avec une deuxième application (30T) comprise dans ledit terminal utilisateur (23);
- des moyens d'authentification et de contrôle (31) des terminaux utilisateurs aptes à authentifier les terminaux utilisateurs appartenant au dit réseau professionnel ;
- une passerelle de distribution (32) assurant la réception et l'émission radio avec ladite au moins une station de base (28) ; et
- des moyens de rattachement local (33) à un réseau local de paquets ;
ledit procédé d'accès étant **caractérisé en ce que** lorsque ladite infrastructure (20) se trouve dans un état de fonctionnement nominal, ledit procédé comporte les étapes suivantes :
- authentifier ledit terminal utilisateur (23) via lesdits moyens d'authentification et de contrôle (31) dès l'arrivée dudit terminal utilisateur (23) dans ladite cellule (29),
- vérifier les droits d'accès dudit terminal utilisateur (23) au dit réseau professionnel de radiocommunication via lesdits moyens d'authentification et de contrôle (31) communiquant avec ladite base de données (27),
- allouer un canal d'accès centralisé (A) reliant ladite passerelle de distribution (32) à ladite application centralisée (25) via lesdits premiers moyens de rattachement centralisé (26); l'allocation dudit canal d'accès centralisé (A) permettant d'allouer dynamiquement au dit terminal utilisateur (23) un canal centralisé de données (34) passant par ledit canal d'accès centralisé (A) rattachant ledit terminal utilisateur (23) aux dits moyens de rattachement centralisé (26) via ladite passerelle de distribution (32),
- allouer un canal d'accès local (B) reliant ladite passerelle de distribution (32) à ladite application locale de communication (30) via lesdits deuxièmes moyens de rattachement local (33); l'allocation dudit canal d'accès local (B) permettant d'allouer dynamiquement au dit terminal utilisateur (23) un canal local de données (35) passant par ledit canal d'accès local (B) rattachant ledit terminal utilisateur (23) aux dits moyens de rattachement local (33) via ladite passerelle de distribution (32),
lesdits canaux d'accès centralisé (A) et local (B) étant accessibles dans un premier état de fonctionnement de l'infrastructure (20) dit état nominal et seul ledit canal d'accès local (B) étant accessible dans un second état de fonctionnement de l'infrastructure (20) dit état isolé de sorte que ledit terminal utilisateur (23) est apte à être rattaché uniquement aux dits moyens de rattachement local (33) via ladite passerelle de distribution (32) au moyen dudit canal local de données (35) lorsque l'accès aux dits moyens de gestion centralisée (21) est interrompu.

13. Procédé selon la revendication 12 **caractérisé en ce qu'**il comporte une étape de détection par des moyens de supervision locale (50) appartenant au dit contrôleur de site (22) d'une perte d'accès des terminaux utilisateurs (23) aux dits moyens de gestion centralisée (21), lesdits moyens de supervision locale (50) forçant le passage de l'état nominal à l'état isolé dans ledit contrôleur de site (22).

14. Procédé selon la revendication 13 **caractérisé en ce qu'**il comporte une étape de détection par lesdits moyens de supervision locale (50) d'une reprise d'accès des terminaux utilisateurs (23) aux dits moyens de gestion centralisée (21), lesdits moyens de supervision locale (50) forçant le passage de l'état Isolé à l'état nominal dans ledit contrôleur de site (22).

## Patentansprüche

1. Infrastruktur (20) eines professionellen Funkkommunikationsnetzes, das im Paketmodus funktioniert, wobei die genannte Infrastruktur (20) eine Sitesteuerung (22) einer geographischen bestimmten Zone (Z) umfasst, umfassend wenigstens eine Basisstation (28), die geeignet ist, die Funk-Übertragung und den Funk-Empfang mit wenigstens einem Benutzerterminal (23) zu gewährleisten, das sich in wenigstens einer Zelle (29) befindet, die an die genannte Basisstation (28) angebunden ist, wobei die genannte Infrastruktur (20) darüber hinaus zentralisierte Managementmittel umfasst, umfassend:
- wenigstens eine zentralisierte Anwendung (25), die geeignet ist, mit einer ersten Anwendung (25T) zu kommunizieren, die in dem genannten Terminal (23) inbegriffen ist;
- zentralisierte Überwachungsmittel (51), die geeignet sind zu erfassen, ob die genannte Infrastruktur (20) sich in einem nominalen oder isolierten Betriebszustand befindet und
- zentralisierte Anbindungsmittel (26) an ein zentralisiertes Paketnetz, um einen Zugang zwischen der genannten wenigstens einen zentralisierten Anwendung (25) und der genannten ersten Anwendung (25T) bei einem Betrieb der genannten Infrastruktur (20) herzustellen, der gemäß einem nominalen Zustand erfasst wird;
wobei die genannte Sitesteuerung (22) umfasst:
- wenigstens eine lokale Kommunikationsanwendung (30), die geeignet ist, mit einer zweiten Anwendung (30T) zu kommunizieren, die in dem genannten Benutzerterminal (23) inbegriffen ist;
- lokale Überwachungsmittel (50), die geeignet sind, zu erfassen, ob die genannte Infrastruktur (20) sich in einem nominalen oder isolierten Betriebszustand befindet;
- Authentifizierungs- und Steuermittel (31) von Benutzerterminals, die geeignet sind, die Benutzerterminals zu authentifizieren, die zu dem genannten professionellen Netz gehören:
- eine Verteilerbrücke (32), die den Funk-Empfang und die Funk-Ausgabe mit der genannten wenigstens einen Basisstation (28) gewährleistet; und
- lokale Anbindungsmittel (33) an ein lokales Paketnetz, um einen Zugang zwischen der genannten lokalen Kommunikationsanwendung (30) und die genannte zweite Anwendung (30T) bei einem Betrieb der genannten Infrastruktur (20) herzustellen, der gemäß einem isolierten Zustand erfasst wird;
wobei die genannte Infrastruktur (20) **dadurch gekennzeichnet ist, dass**:
- wenn die genannte Infrastruktur (20) sich in einem nominalen Betriebszustand befindet, jedem Benutzerterminal (23), das sich in der geographischen bestimmten Zone befindet und das an die genannte Sitesteuerung (22) angebunden ist, dann zugeordnet wird:
- ein zentralisierter Zugangskanal (A), der die genannte Verteilerbrücke (32) an die genannte zentralisierte Anwendung (25) über die genannten ersten Anbindungsmittel (26) anbindet, wobei das genannte Benutzerterminal (23) geeignet ist, an die genannten ersten Anbindungsmittel (26) über die genannte Verteilerbrücke (32) mittels eines zentralisierten Datenkanals (34) angebunden zu werden, der ihm dynamisch zugeordnet ist, wobei der genannte zentralisierte Datenkanal (34) durch den genannten zentralisierten Zugangskanal (A) durchtritt;
- wobei ein lokaler Zugangskanal (B), der die genannte Verteilerbrücke (32) an die genannte lokale Kommunikationsanwendung (30) über die genannten zweiten Anbindungsmittel (33) anbindet, wobei das genannte Benutzerterminal (23) geeignet ist, an die genannten zweiten Anbindungsmittel (33) über die genannte Verteilerbrücke (32) mittels eines lokalen Datenkanals (35) angebunden zu werden, der ihr dynamisch zugeordnet ist, wobei der genannte lokale Datenkanal (35) durch den genannten lokalen Zugangskanal (B) durchtritt;
- wenn die genannte Infrastruktur (20) sich in einem isolierten Betriebszustand befindet, in dessen Verlauf der Zugang zu den genannten zentralisierten Managementmitteln (21) unterbrochen ist, wird jedem Benutzerterminal (23), das sich in der geographischen bestimmten Zone befindet, und der genannten Sitesteuerung (22) zugeordnet ist, nur der genannte lokale Zugangskanal (B) zugeordnet, wobei das genannte Benutzerterminal (23) geeignet ist, den genannten zweiten Anbindungsmitteln (33) über die genannte Verteilerbrücke (32) mittels des genannten lokalen Datenkanals (35) zuzuordnen, der ihm dynamisch zugeordnet ist und durch den genannten lokalen Zugangskanal (B) durchtritt.

2. Infrastruktur eines professionellen Funkkommunikationsnetzes (20) gemäß dem voranstehenden Anspruch, **dadurch gekennzeichnet, dass** die genannten zentralisierten Managementmittel (21) eine Datenbank (27) umfassen, umfassend Informationen relativ zum Zugangsrecht von Benutzerterminals zu dem genannten professionellen Funkkommunikationsnetz.

3. Infrastruktur eines professionellen Funkkommunikationsnetzes (20) gemäß einem der voranstehenden Ansprüche, **dadurch gekennzeichnet, dass** in dem genannten nominalen Zustand jedes kommunizierende Benutzerterminal (23), das sich in der geographischen bestimmten Zone befindet und an die genannte Sitesteuerung (22) angebunden ist, gleichzeitig an die genannte zentralisierte Anwendung (25) über den genannten zentralisierten Datenkanal (34) und an die genannte lokale Kommunikationsanwendung (30) über den genannten lokalen Datenkanal (35) derart angeschlossen ist, dass das genannte Benutzerterminal (23) nur den genannten lokalen Datenkanal (35) beim Umschalten der genannten Infrastruktur (20) in ihren isolierten Zustand beibehält.

4. Infrastruktur eines professionellen Funkkommunikationsnetzes (20) gemäß Anspruch 1 bis 2, **dadurch gekennzeichnet, dass** in dem genannten nominalen Zustand jedes kommunizierende Benutzerterminal (23), das sich in der geographischen bestimmten Zone befindet und an die genannte Sitesteuerung (22) angebunden ist, nur an die genannte zentralisierte Anwendung (25) über den genannten zentralisierten Datenkanal (34) angebunden ist, wobei der genannte lokale Datenkanal (35) beim Umschalten der genannten Infrastruktur (20) in ihren isolierten Zustand effektiv ist.

5. Infrastruktur eines professionellen Funkkommunikationsnetzes (20) gemäß einem der voranstehenden Ansprüche, **dadurch gekennzeichnet, dass** sie einem mobilen Funkkommunikationsstandard mit hoher Kapazität oder Breitband im Modus komplett IP vom Typ LTE oder WIMAX konform ist.

6. Infrastruktur eines professionellen Funkkommunikationsnetzes (20) gemäß Anspruch 1 bis 4 und Anspruch 5, **dadurch gekennzeichnet, dass** sie mit einem mobilen Funkkommunikationsstandard LTE konform ist,
- wobei die genannten zentralisierten Anbindungsmittel (26) durch eine Einheit PDN-GW "Packet Data Network Gateway" gebildet sind,
- wobei die genannte Datenbank (27) durch eine Einheit HSS "Home Subscriber Server" gebildet ist,
- wobei die genannten zentralisierten Überwachungsmittel (51) durch eine Systemüberwachungseinheit gebildet sind,
- wobei die genannten lokalen Anbindungsmittel (33) durch eine zweite Einheit PDN-GW "Packet Data Network Gateway" gebildet sind,
- wobei die genannten Authentifizierungs- und Steuermittel (31) der genannten Benutzerterminals durch eine Einheit MME "Mobility Management Entity" realisiert sind,
- wobei die genannte Verteilerbrücke (32) durch eine Einheit S-GW "Serving Gateway" gebildet ist,
- wobei die genannten lokalen Überwachungsmittel (50) durch eine Siteüberwachungseinheit gebildet sind,
- wobei wenigstens eine Basisstation (28) durch eine Einheit eNodeB "evolved NodeB" gebildet ist.

7. Infrastruktur eines professionellen Funkkommunikationsnetzes (20) gemäß einem der voranstehenden Ansprüche, **dadurch gekennzeichnet, dass** die genannten Authentifizierungs- und Steuermittel (31) der Benutzerterminals geeignet sind, eine Verteilerbrücke und zentralisierte Anbindungsmittel an ein zentralisiertes Netzpaket auszuwählen, die zur Umsetzung des genannten zentralisierten Datenkanals (34) dienen werden, der durch den genannten zentralisierten Zugangskanal (A) hindurchtritt.

8. Infrastruktur eines professionellen Funkkommunikationsnetzes (20) gemäß einem der voranstehenden Ansprüche, **dadurch gekennzeichnet, dass** die genannten Authentifizierungs- und Steuermittel (31) der Nutzerterminals geeignet sind, eine Verteilerbrücke und lokale Anbindungsmittel an ein lokales Paketnetz auszuwählen, die zur Umsetzung des genannten lokalen Datenkanals (35) dienen werden, der durch den genannten lokalen Zugangskanal (B) hindurchtritt.

9. Infrastruktur eines professionellen Funkkommunikationsnetzes (20) gemäß einem der voranstehenden Ansprüche, **dadurch gekennzeichnet, dass** sie wenigstens zwei Sitesteuerungen (122, 222) umfasst, die geeignet sind, jeweils eine bestimmte geographische Zone zu verwalten, wobei die genannten wenigstens zwei Sitesteuerungen (122, 222) geeignet sind, miteinander zu kommunizieren und jede der genannten Sitesteuerungen (122, 222) geeignet ist, mit den genannten zentralisierten Managementmitteln (21) zu kommunizieren.

10. Infrastruktur eines professionellen Funkkommunikationsnetzes (20) gemäß einem der voranstehenden Ansprüche, **dadurch gekennzeichnet, dass** wenigstens eines der genannten Paketnetze ein IP-Netz ist.

11. Infrastruktur eines professionellen Funkkommunikationsnetzes (20) gemäß einem der voranstehenden Ansprüche, **dadurch gekennzeichnet, dass** die genannten Authentifizierungs- und Steuermittel (31) Mittel umfassen, um den genannten zentralisierten Datenkanal (34) und den genannten lokalen Datenkanal (35) zuzuordnen.

12. Zugangsverfahren eines Benutzerterminals (23) zu wenigstens einer lokalen Kommunikationsanwendung (30) und wenigstens einer zentralisierten Anwendung (25) innerhalb einer Infrastruktur (20) eines professionellen Funkkommunikationsnetzes, wobei die genannte Infrastruktur umfasst:
- zentralisierte Managementmittel (21), umfassend:
- wenigstens eine zentralisierte Anwendung (25), die geeignet ist, mit einer ersten Anwendung (25T) zu kommunizieren, die in dem genannten Terminal (23) inbegriffen ist,
- zentralisierte Überwachungsmittel (51), die geeignet sind zu erfassen, ob die genannte Infrastruktur (20) in einem nominalen oder isolierten Betriebszustand ist, und
- zentralisierte Anbindungsmittel (26) an ein zentralisiertes Paketnetz zur Herstellung eines Zugangs zwischen der genannten wenigstens einen zentralisierten Anwendung (25) und der genannten wenigstens ersten Anwendung (25T) bei einem Betrieb der genannten Infrastruktur (20), der gemäß einem nominalen Zustand erfasst wird;
- eine Datenbank (27), umfassend Informationen relativ zur Zugangsberechtigung von Benutzerterminals zum genannten professionellen Funkkommunikationsnetz,
- eine Sitesteuerung (22) einer geographischen bestimmten Zone, umfassend:
- wenigstens eine Basisstation (28), die geeignet ist, die Funk-Übertragung und den Funk-Empfang mit den Benutzerterminals zu gewährleisten, die sich in wenigstens einer Zelle (29) befinden, die an die genannte Basisstation (28) angebunden ist;
- wenigstens eine lokale Kommunikationsanwendung (30), die geeignet ist, mit einer zweiten Anwendung (30T) zu kommunizieren, die in dem genannten Benutzerterminal (23) inbegriffen ist;
- Authentifizierungs- und Steuermittel (31) der Benutzerterminals, die geeignet sind, die Benutzerterminals zu authentifizieren, die zu dem genannten professionellen Netzwerk gehören;
- eine Verteilerbrücke (32), die den Funk-Empfang und die Funk-Ausgabe mit der genannten wenigstens einen Basisstation (28) gewährleistet; und
- lokale Anbindungsmittel (33) an ein lokales Paketnetz;
wobei das genannte Zugangsverfahren **dadurch gekennzeichnet ist, dass**, wenn die genannte Infrastruktur (20) sich in einem nominalen Betriebszustand befindet, das genannte Verfahren die folgenden Stufen umfasst:
- Authentifizierung des genannten Benutzerterminals (23) über die genannten Authentifizierungs- und Steuermittel (31) sofort beim Eintreffen des genannten Benutzerterminals (23) in der genannten Zelle (29),
- Überprüfung der Zugangsrechte des genannten Benutzerterminals (23) zum genannten professionellen Funkkommunikationsnetz über die genannten Authentifizierungs- und Steuermittel (31), die mit der genannten Datenbank (27) kommunizieren,
- Zuordnung eines zentralisierten Zugangskanals (A), der die genannte Verteilerbrücke (32) an die genannte zentralisierte Anwendung (25) über die genannten ersten zentralisierten Anbindungsmittel (26) anbindet; wobei die Zuordnung des genannten zentralisierten Zugangskanals (A) die dynamische Zuordnung eines zentralisierten Datenkanals (34) zu dem genannten Benutzerterminal (23) zulässt, der durch den zentralisierten Zugangskanal (A) hindurchtritt, der das genannte Benutzerterminal (23) an die genannten zentralisierten Anbindungsmittel (26) über die genannte Verteilerbrücke (32) anbindet,
- Zuordnung eines lokalen Zugangskanals (B), der die genannte Verteilerbrücke (32) an die genannte lokale Kommunikationsanwendung (30) über die genannten zweiten lokalen Anbindungsmittel (33) anbindet; wobei die Zuordnung des genannten lokalen Zugangskanals (B) die dynamische Zuordnung eines lokalen Datenkanals (35) zu dem genannten Benutzerterminal (23) zulässt, der durch den genannten lokalen Zugangskanal (B) hindurchtritt, der das genannte Benutzerterminal (23) an die genannten lokalen Anbindungsmittel (33) über die genannte Verteilerbrücke (32) anschließt,
wobei die genannten zentralisierten (A) und lokalen (B) Zugangskanäle in einem ersten Betriebszustand der Infrastruktur (20), bezeichnet als nominaler Zustand, zugänglich sind und nur der genannte lokale Zugangskanal (B) in einem zweiten Betriebszustand der Infrastruktur (20), bezeichnet als isolierter Zustand, derart zugänglich ist, dass das genannte Benutzerterminal (23) geeignet ist, nur an die genannten lokalen Anbindungsmittel (33) über die genannte Verteilerbrücke (32) mittels des genannten lokalen Datenkanals (35) angebunden zu sein, wenn der Zugang zu den genannten zentralisierten Managementmitteln (21) unterbrochen ist.

13. Verfahren gemäß Anspruch 12, **dadurch gekennzeichnet, dass** es eine Erfassungsstufe durch lokale Überwachungsmittel (50) umfasst, die zu der genannten Sitesteuerung (22) eines Zugangsverlustes der Benutzerterminals (23) zu den genannten zentralisierten Managementmitteln (21) gehören, wobei die genannten lokalen Überwachungsmittel (50) den Übergang vom nominalen Zustand zum isolierten Zustand in der genannten Sitesteuerung (2) erzwingen.

14. Verfahren gemäß Anspruch 13, **dadurch gekennzeichnet, dass** es eine Erfassungsstufe durch die genannten lokalen Überwachungsmittel (50) einer Zugangswiederaufnahme der Benutzerterminals (23) zu den genannten zentralisierten Verwaltungsmitteln (21) umfasst, wobei die genannten lokalen Überwachungsmittel (50) den Übergang vom isolierten Zustand zum nominalen Zustand in der genannten Sitesteuerung (22) erzwingen.

## Claims

1. Professional radiocommunication network infrastructure (20) operating in packet mode, said infrastructure (20) comprising a site controller (22) for a determined geographical zone (Z) comprising at least one base station (28) able to ensure radio transmission and reception with at least one user terminal (23) situated in at least one cell (29) attached to said base station (28), said infrastructure (20) further comprising means of centralised management (21) comprising:
- at least one centralised application (25) able to communicate with a first application (25T) included in said terminal (23);
- means of centralised supervision (51) able to detect whether said infrastructure (20) is in a nominal or isolated operating state; and
- means of centralized attachment (26) to a centralised packet network so as to establish access between said at least one centralised application (25) and said first application (25T) when operation of said infrastructure (20) is detected in accordance with a nominal state;
said site controller (22) comprising:
- at least one local communication application (30) able to communicate with a second application (30T) included in said user terminal (23);
- means of local supervision (50) able to detect whether said infrastructure (20) is in a nominal or isolated operating state;
- means for authenticating and controlling (31) user terminals able to authenticate the user terminals belonging to said professional network;
- a distribution gateway (32) ensuring radio reception and transmission with said at least one base station (28) ; and
- means of local attachment (33) to a local packet network so as to establish access between said local communication application (30) and said second application (30T) when operation of said infrastructure (20) is detected in accordance with an isolated state:
said infrastructure (20) **characterised in that**:
- when said infrastructure (20) is in a nominal operation state, is allocated to each user terminal (23) situated in the determined geographical zone and attached to said site controller (22):
- a centralised access channel (A) connecting said distribution gateway (32) to said centralised application (25) via said first means of attachment (26), said user terminal (23) able to be attached to said first means of attachment (26) via said distribution gateway (32) by means of a centralised data channel (34) that is dynamically allocated to it, said centralised data channel (34) passing through said centralised data channel (A);
- a local access channel (B) connecting said distribution gateway (32) to said local communication application (30) via said second means of attachment (33), said user terminal (23) able to be attached to said second means of attachment (33) via said distribution gateway (32) by means of a local data channel (35) that is dynamically allocated to it, said local data channel (35) passing through said local access channel (B);
- when said infrastructure (20) is in an isolated operating state during which access to said means of centralised management (21) is interrupted, is allocated to each user terminal (23) situated in the determined geographical zone and attached to said site controller (22) only said local access channel (B), said user terminal (23) able to be attached to said second means of attachment (33) via said distribution gateway (32) by means of said local data channel (35) that is dynamically allocated to it and passing through said local access channel (B).

2. Professional radiocommunication network infrastructure (20) according to the preceding claim **characterised in that** said means of centralised management (21) comprise a database (27) comprising information concerning the access right of user terminals to said professional radiocommunication network.

3. Professional radiocommunication network infrastructure (20) according to one of the preceding claims **characterised in that** in said nominal state, each communicating user terminal (23) situated in the determined geographical zone and attached to said site controller (22) is simultaneously connected to said centralised application (25) via said centralised data channel (34) and to said local communication application (30) via said local data channel (35) in such a way that said user terminal (23) retains only said local data channel (35) during the switching of said infrastructure (20) in its isolated state.

4. Professional radiocommunication network infrastructure (20) according to one of claims 1 to 2 **characterised in that**, in said nominal state, each communicating user terminal (23) situated in the determined geographical zone and attached to said site controller (22) is connected only to said centralised application (25) via said centralised data channel (34), said local data channel (35) being effective during the switching of said infrastructure (20) in its isolated state.

5. Professional radiocommunication network infrastructure (20) according to one of the preceding claims **characterised in that** it is compliant with a mobile radiocommunication standard of high capacity or of high speed in all-IP mode of the LTE or WIMAX type.

6. Professional radiocommunication network infrastructure (20) according to one of claims 1 to 4 and claim 5 **characterised in that** it is compliant with an LTE mobile radiocommunication standard,
- said means of centralised attachment (26) being formed by a PDN-GW "Packet Data Network Gateway" entity,
- said database (27) being formed by an HSS "Home Subscriber Server" entity,
- said means of centralised supervision (51) being formed by a system supervision entity,
- said means of local attachment (33) being formed by a second PDN-GW "Packet Data Network Gateway" entity,
- said means of authenticating and controlling (31) said user terminals being carried out by an MME "Mobility Management Entity" entity,
- said distribution gateway (32) being formed by a S-GW "Serving Gateway" entity,
- said means of local supervision (50) being formed by a site supervision entity,
- said at least one base station (28) being formed by an eNodeB "evolved NodeB" entity.

7. Professional radiocommunication network infrastructure (20) according to one of the preceding claims **characterised in that** said means of authenticating and controlling (31) user terminals are able to select a distribution gateway and means of centralized attachment to a centralised packet network which will be used to implement said centralised data channel (34) passing through said centralised access channel (A).

8. Professional radiocommunication network infrastructure (20) according to one of the preceding claims **characterised in that** said means of authenticating and controlling (31) user terminals are able to select a distribution gateway and means of local attachment to a local packet network which will be used to implement said local data channel (35) passing through said local access channel (B).

9. Professional radiocommunication network infrastructure (20) according to one of the preceding claims **characterised in that** it comprises at least two site controllers (122, 222) each able to manage a determined geographical zone, said at least two site controllers (122, 222) able to communicate with each other and each one of said site controllers (122, 222) able to communicate with said means of centralised management (21) .

10. Professional radiocommunication network infrastructure (20) according to one of the preceding claims **characterised in that** at least one of said packet networks is an IP network.

11. Professional radiocommunication network infrastructure (20) according to one of the preceding claims **characterised in that** said means of authenticating and controlling (31) comprise means for dynamically allocating said centralised data channel (34) and said local data channel (35).

12. Method of access for a user terminal (23) to at least one local communication application (30) and at least one centralised application (25) within a professional radiocommunication network infrastructure (20), said infrastructure comprising:
- means of centralised management (21) comprising:
- at least one centralised application (25) able to communicate with a first application (25T) included in said terminal (23),
- means of centralised supervision (51) able to detect whether said infrastructure (20) is in a nominal or isolated operating state, and
- means of centralized attachment (26) to a centralised packet network so as to establish access between said at least one centralised application (25) and said first application (25T) when operation of said infrastructure (20) is detected in accordance with a nominal state;
- a database (27) comprising information concerning the access right of user terminals to said professional radiocommunication network,
- a site controller (22) for a determined geographical zone comprising:
- at least one base station (28) able to ensure radio transmission and reception with user terminals situated in at least one cell (29) attached to said base station (28);
- at least one local communication application (30) able to communicate with a second application (30T) included in said user terminal (23);
- means for authenticating and controlling (31) user terminals able to authenticate the user terminals belonging to said professional network;
- a distribution gateway (32) ensuring radio reception and transmission with said at least one base station (28); and
- means of local attachment (33) to a local packet network;
said method for access **characterised in that** when said infrastructure (20) is in a nominal operation state, said method comprises the following steps:
- authenticating said user terminal (23) via said means of authenticating and controlling (31) as soon as said user terminal (23) arrives in said cell (29),
- verifying the access rights of said user terminal (23) to said professional radiocommunication network via said means of authenticating and controlling (31) communicating with said database (27),
- allocating a centralised access channel (A) connecting said distribution gateway (32) to said centralised application (25) via said first means of centralised attachment (26); with the allocating of said centralised access channel (A) making it possible to dynamically allocate to said user terminal (23) a centralised data channel (34) passing through said centralised data channel (A) attaching said user terminal (23) to said means of centralised attachment (26) via said distribution gateway (32),
- allocating a local access channel (B) connecting said distribution gateway (32) to said local communication application (30) via said second means of attachment local (33); with the allocating of said local access channel (B) making it possible to dynamically allocate to said user terminal (23) a local data channel (35) passing through said local access channel (B) attaching said user terminal (23) to said means of local attachment (33) via said distribution gateway (32), said centralised (A) and local (B) access channel being accessible in a first operating state of the infrastructure (20) referred to a nominal state and only said local access channel (B) being accessible in a second operating state of the infrastructure (20) referred to as isolated state in such a way that said user terminal (23) is able to be attached only to said means of local attachment (33) via said distribution gateway (32) by means of said local data channel (35) when access to said means of centralised management (21) is interrupted.

13. Method according to claim 12 **characterised in that** it comprises a step of detecting by means of local supervision (50) belonging to said site controller (22) of a loss of access of user terminals (23) to said means of centralised management (21), said means of local supervision (50) forcing the passage from the nominal state to the isolated state in said site controller (22).

14. Method according to claim 13 **characterised in that** it comprises a step of detecting by said means of local supervision (50) of a resuming of access of user terminals (23) to said means of centralised management (21), said means of local supervision (50) forcing the passage from the isolated state to the nominal state in said site controller (22).
